# EUROPEAN PATENT APPLICATION

(11) **EP 4 668 977 A1**
(43) Date of publication of application: **24.12.2025**
(21) Application number: 23921930.6
(22) Date of filing: 16.02.2023
(51) Int. Cl.: H04W 72/232

(54) **METHOD AND APPARATUS FOR SCHEDULING MTRP TRANSMISSION, COMMUNICATION DEVICE AND STORAGE MEDIUM**

(71) Applicant: Beijing Xiaomi Mobile Software Co., Ltd., Beijing 100085 (CN)
(72) Inventor: ZHOU, Rui, Beijing 100085 (CN)
(74) Representative: Dehns Germany Partnerschaft mbB
(86) International application number: PCT/CN2023/076639
(87) International publication number: WO 2024/168776

(57) **Abstract**

Embodiments of the present disclosure provide a method for scheduling multiple transmission and reception point (mTRP) transmission. The method is executed by an access network device, and comprises: determining a maximum transmit time difference (MTTD) supported by a terminal; and on the basis of the MTTD, determining whether to schedule transmission of multiple downlink control information (M-DCI) of mTRPs of the terminal. Here, whether to schedule the transmission of the M-DCI of the mTRPs of the terminal can be adapted to the capability of the terminal, and compared with a mode of scheduling the transmission of the M-DCI of the mTRPs of the terminal without considering the capability of the terminal, the method can be adapted to the MTTD supported by the terminal, so that scheduling the transmission of the M-DCI of the mTRPs of the terminal is more reliable.

## Description

### TECHNICAL FIELD

The present disclosure relates to the field of wireless communication technology but is not limited to the field of wireless communication technology, and in particular to a scheduling method, apparatus, communication equipment and storage medium for multiple transmission reception point (mTRP) transmission.

### BACKGROUND

In wireless communication technology, a plurality of transmission reception points (TRP) are introduced, and multiple TRP transmission (mTRP, muti-TRP) can be performed. Two control methods are introduced: single downlink control signaling (S-DCI, Single Downlink Control Information) and multiple downlink control signaling (M-DCI, Mutiple Downlink Control Information). In related technologies, the mechanism for the terminal to execute the transmission of the M-DCI of mTRP is still imperfect. How to realize the transmission of the M-DCI of mTRP is an issue that needs to be considered.

### SUMMARY

The embodiments of the present disclosure disclose a scheduling method, apparatus, communication device and storage medium for mTRP transmission.

According to a first aspect of an embodiment of the present disclosure, a method for scheduling multiple transmission reception point (mTRP) transmission is provided, wherein the method is performed by an access network device, and the method includes:
determining a maximum transmit timing difference (MTTD) supported by a terminal; and
scheduling a transmission operation of multiple downlink control information (M-DCI) of the mTRP of the terminal based on the MTTD.

In one embodiment, scheduling the transmission operation of the M-DCI of the mTRP of the terminal based on the MTTD includes:
scheduling the transmission operation of the M-DCI of the mTRP of the terminal based on the MTTD and a difference between timing advances (TA) of TRPs of the mTRP.

In one embodiment, scheduling the transmission operation of the M-DCI of the mTRP of the terminal based on the MTTD and the difference between the TAs of TRPs of the mTRP includes:
scheduling the transmission operation of the M-DCI of the mTRP of the terminal in response to the difference between the TAs of the MTTD and the TRPs being smaller than or equal to the MTTD;
   or,
not scheduling the transmission operation of the M-DCI of the mTRP of the terminal in response to the difference between the TAs of the MTTD and the TRPs being greater than or equal to the MTTD.

In one embodiment, the determining the maximum transmit timing difference (MTTD) supported by the terminal includes:
determining the MTTD supported by the terminal based on predetermined configuration information;
   or,
determining the MTTD supported by the terminal based on terminal capability information, wherein the terminal capability information indicates the MTTD.

In one embodiment, the determining the MTTD supported by the terminal based on the terminal capability information includes:
in response to being configured with predetermined configuration information and receiving the terminal capability information, determining the MTTD supported by the terminal based on the terminal capability information.

In one embodiment, the method further includes:
receiving the terminal capability information sent by the terminal.

In one embodiment, the determining the MTTD supported by the terminal based on predetermined configuration information includes:
determining the MTTD supported by the terminal based on predetermined configuration information, a receive timing difference (RTD) and a cyclic prefix (CP).

In one embodiment, the predetermined configuration information includes first predetermined configuration information and second predetermined configuration information; and determining the MTTD supported by the terminal based on the predetermined configuration information, the TRD and the CP includes:
determining the MTTD based on the first predetermined configuration information in response the RTD being greater than or equal to the CP;
   or,
determining the MTTD based on the second predetermined configuration information in response the RTD being smaller than or equal to the CP.

In one embodiment, the first predetermined configuration information indicates a mapping relationship between a frequency range and the MTTD.

In one embodiment, the second predetermined configuration information indicates a mapping relationship between a frequency range, a predetermined value and a cyclic prefix (CP), and the predetermined value and the cyclic prefix are used to determine a corresponding MTTD.

In one embodiment, the method further includes:
determining the CP based on a subcarrier spacing of data transmission and a CP type.

In one embodiment, the MTTD is determined based on an operating frequency range; or, the MTTD is determined based on a current operating frequency band.

According to a second aspect of an embodiment of the present disclosure, a method for scheduling multiple transmission reception point (mTRP) transmission is provided, wherein the method is performed by a terminal, and the method includes:
sending terminal capability information to an access network device;
wherein the terminal capability information indicates a maximum transmit timing difference (MTTD) for scheduling a transmission operation of multiple downlink control information (M-DCI) of the mTRP of the terminal.

In one embodiment, the MTTD is determined based on an operating frequency range; or, the MTTD is determined based on a current operating frequency band.

According to a third aspect of an embodiment of the present disclosure, an apparatus for scheduling multiple transmission reception point (mTRP) transmission is provided, wherein the apparatus includes:
a determining module, configured to determine a maximum transmit timing difference (MTTD) supported by a terminal; and
schedule a transmission operation of multiple downlink control information (M-DCI) of the mTRP of the terminal based on the MTTD.

According to a fourth aspect of an embodiment of the present disclosure, an apparatus for scheduling multiple transmission reception point (mTRP) transmission is provided, wherein the apparatus includes:
a sending module, configured to send terminal capability information to an access network device;
wherein the terminal capability information indicates a maximum transmit timing difference (MTTD) for scheduling a transmission operation of multiple downlink control information (M-DCI) of the mTRP of the terminal.

According to a fifth aspect of an embodiment of the present disclosure, a communication device is provided, the communication device includes:
a processor; and
a memory for storing instructions executable by the processor;
wherein the processor is configured to implement the method described in any embodiment of the present disclosure when running the executable instructions.

According to a sixth aspect of an embodiment of the present disclosure, a computer storage medium is provided, wherein the computer storage medium stores a computer executable program, and when the executable program is executed by a processor, the method described in any embodiment of the present disclosure is implemented.

In an embodiment of the present disclosure, the maximum transmit timing difference (MTTD) supported by the terminal is determined; based on the MTTD, the transmission operation of the multiple downlink control information (M-DCI) of the multiple transmission reception point (mTRP) of the terminal is scheduled. Here, whether to schedule the transmission of the multiple downlink control information (M-DCI) of the multiple transmission reception point (mTRP) of the terminal can be determined based on the maximum transmit timing difference (MTTD) supported by the terminal. In this way, whether to schedule the transmission of the multiple downlink control information (M-DCI) of the multiple transmission reception point (mTRP) of the terminal can be adapted to the capability of the terminal. Compared with scheduling the transmission of the multiple downlink control information (M-DCI) of the multiple transmission reception point (mTRP) of the terminal without considering the capability of the terminal, the scheduling can be adapted to the maximum transmit timing difference (MTTD) supported by the terminal, so that the transmission of the multiple downlink control information (M-DCI) of the multiple transmission reception point (mTRP) of the terminal can be scheduled more reliably.

### BRIEF DESCRIPTION OF THE DRAWINGS

FIG. 1 is a schematic structural diagram of a wireless communication system according to an exemplary embodiment.
FIG. 2 is a schematic flow chart of a method for scheduling mTRP transmission according to an exemplary embodiment.
FIG. 3 is a schematic flow chart of a method for scheduling mTRP transmission according to an exemplary embodiment.
FIG. 4 is a schematic flow chart of a method for scheduling mTRP transmission according to an exemplary embodiment.
FIG. 5 is a schematic flow chart of a method for scheduling mTRP transmission according to an exemplary embodiment.
FIG. 6 is a schematic flow chart of a method for scheduling mTRP transmission according to an exemplary embodiment.
FIG. 7 is a schematic flow chart of a method for scheduling mTRP transmission according to an exemplary embodiment.
FIG. 8 is a schematic diagram of an apparatus for scheduling mTRP transmission according to an exemplary embodiment.
FIG. 9 is a schematic diagram of an apparatus for scheduling mTRP transmission according to an exemplary embodiment.
FIG. 10 is a schematic structural diagram of a terminal according to an exemplary embodiment.
FIG. 11 is a block diagram of a base station according to an exemplary embodiment.

### DETAILED DESCRIPTION

Exemplary embodiments will be described in detail herein, examples of which are shown in the accompanying drawings. When the following description refers to the drawings, unless otherwise indicated, the same numbers in different drawings represent the same or similar elements. The implementations described in the following exemplary embodiments do not represent all implementations consistent with the embodiments of the present disclosure. Instead, they are merely examples of devices and methods consistent with some aspects of the embodiments of the present disclosure as detailed in the appended claims.

The terms used in the disclosed embodiments are only for the purpose of describing specific embodiments and are not intended to limit the disclosed embodiments. The singular forms of "a", "an" and "the" used in the disclosed embodiments and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the disclosed embodiments, the information should not be limited to these terms. These terms are only used to distinguish the same type of information from each other. For example, without departing from the scope of the disclosed embodiments, the first information may also be referred to as the second information, and similarly, the second information may also be referred to as the first information. Depending on the context, the word "if" as used herein may be interpreted as "at the time of" or "when" or "in response to determining".

For the purpose of brevity and ease of understanding, the terms "greater than" or "less than" are used herein to characterize size relationships. However, those skilled in the art can understand that the term "greater than" also covers the meaning of "greater than or equal to", and "less than" also covers the meaning of "less than or equal to".

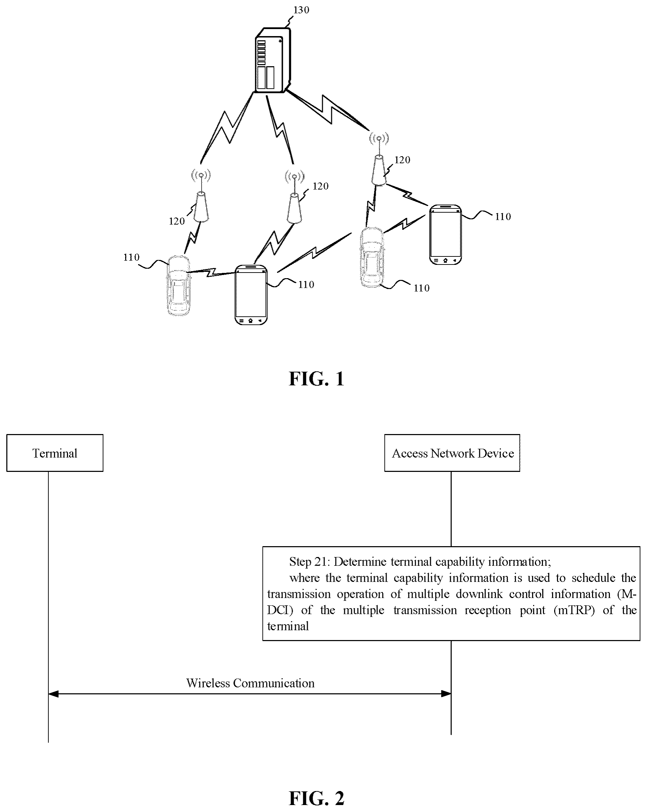

Referring to FIG. 1, which shows a schematic diagram of the structure of a wireless communication system provided by an embodiment of the present disclosure. As shown in FIG. 1, the wireless communication system is a communication system based on mobile communication technology, and the wireless communication system may include: a plurality of user equipment 110 and a plurality of base stations 120. It should be noted that the user equipment (UE) in the present disclosure may be a terminal, and it can be understood that the terminal in the present disclosure may be considered as the user equipment.

The user equipment 110 can be a device that provides voice and/or data connectivity to the user. The user equipment 110 can communicate with one or more core networks via a radio access network (RAN). The user equipment 110 can be an Internet of Things user equipment, such as a sensor device, a mobile phone, and a computer with an Internet of Things user equipment. For example, it can be a fixed, portable, pocket-sized, handheld, computer-built-in or vehicle-mounted device. For example, a station (STA), a subscriber unit, a subscriber station, a mobile station, a mobile, a remote station, an access point, a remote user device, an access terminal, a user terminal, a user agent, a user device, or a user equipment. Alternatively, the user equipment 110 can also be a device of an unmanned aerial vehicle. Alternatively, the user equipment 110 can also be a vehicle-mounted device, for example, it can be a driving computer with wireless communication function, or a wireless user device connected to an external driving computer. Alternatively, the user equipment 110 may also be a roadside device, for example, a street lamp, a signal lamp or other roadside device with a wireless communication function.

The base station 120 may be a network-side device in a wireless communication system. The wireless communication system may be a fourth generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as NG-RAN (New Generation-Radio Access Network).

The base station 120 can be an evolved base station (eNB) adopted in a 4G system. Alternatively, the base station 120 can also be a base station (gNB) adopting a centralized distributed architecture in a 5G system. When the base station 120 adopts a centralized distributed architecture, it usually includes a centralized unit (CU) and at least two distributed units (DU). The centralized unit is provided with a protocol stack of a packet data convergence protocol (PDCP) layer, a radio link layer control protocol (RLC) layer, and a media access control (MAC) layer; the distributed unit is provided with a physical (PHY) layer protocol stack. The specific implementation method of the base station 120 is not limited in the embodiment of the present disclosure.

A wireless connection may be established between the base station 120 and the user equipment 110 via a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In some embodiments, an E2E (End to End) connection may also be established between the user devices 110, such as V2V (vehicle to vehicle) communication, V2I (vehicle to Infrastructure) communication, and V2P (vehicle to pedestrian) communication in vehicle to everything (V2X) communication.

Here, the above-mentioned user equipment can be considered as the terminal device of the following embodiments.

In some embodiments, the wireless communication system may further include a network management device 130.

Several base stations 120 are respectively connected to a network management device 130. The network management device 130 may be a core network device in a wireless communication system, for example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS). The embodiment of the present disclosure does not limit the implementation form of the network management device 130.

In order to facilitate the understanding of those skilled in the art, the embodiments of the present disclosure list multiple implementation methods to clearly illustrate the technical solutions of the embodiments of the present disclosure. Of course, those skilled in the art can understand that the multiple embodiments provided by the embodiments of the present disclosure can be executed separately, or can be executed together with the methods of other embodiments of the embodiments of the present disclosure, or can be executed together with some methods in other related technologies separately or in combination; the embodiments of the present disclosure do not limit this.

In order to better understand the embodiments of the present disclosure, the following exemplary descriptions of relevant scenarios are given:

In one scenario embodiment, the terminal and/or the base station supports multi-TRP transmission of two TRPs.

In one embodiment, the base station needs to receive transmission signals from multiple terminals in the same uplink time slot, and the distance between each terminal and the base station may vary greatly. The signal attenuation also varies with the location of the terminal. Therefore, a timing advance (TA) needs to be introduced. That is, each terminal corresponds to a base station and needs a specific timing advance (TA) to ensure that different terminals use different TAs for uplink transmission according to their distances from the base station, so as to ensure that the time when signals from different terminals arrive at the base station is basically the same.

In one embodiment, in the M-DCI mode, the TAs of the two TRPs are consistent, so that the time difference between the two transmitted signals of the terminal is 0, which can ensure low complexity of the terminal implementation. However, the requirement of the same TA will limit the flexibility of base station deployment.

In one embodiment, the timing advance value of base station 1 is TA1, and the timing advance value of base station 2 is TA2, then the timing advances of the two transmission links of the terminal have a time difference ΔT=TA1-TA2. The maximum transmit timing difference (MTTD) supported by the terminal limits the multi-TRP transmission capability of the base station in this case, that is, if the timing advance difference ΔT between the two TRPs < MTTD, the corresponding multi-TRP M-DCI transmission can be performed, and if ΔT> MTTD, the multi-TRP M-DCI transmission cannot be performed. The MTTD requirements in the case of multi-TRP M-DCI have not been clarified in the relevant technology, so the base station cannot judge the operation of the multi-TRP M-DCI by ΔT. The present invention clarifies the MTTD requirements of the terminal through a method of presetting values and/or reporting terminal capabilities to ensure that the base station can schedule the transmission of the multi-TRP M-DCI of the terminal according to the corresponding MTTD.

It should be noted that when considering the MTTD, what is actually considered is the distance difference between the terminal and two different base stations. This is also reflected in the maximum receive timing difference (MRTD). Therefore, the MRTD and the MTTD are directly related.

In one embodiment, for base stations from different locations, the terminal needs to receive downlink transmission signals from different base stations within the same time as much as possible to ensure that the corresponding transmission signals can be processed at the same time, reducing the complexity of the terminal processing signals. Here, the terminal receiving side generally considers that the time difference of the signals from two base stations to the terminal needs to be less than the cyclic prefix (CP), so that the terminal can complete the processing of the two arriving signals within a fast Fourier transform (FFT) window to maintain the processing complexity and processing delay of the terminal receiving end. Therefore, for the discussion of the receive timing difference (RTD), the distinction is made between greater than CP and less than CP. Similarly, for MTTD, it is also distinguished between greater than CP and less than CP, which will be reflected in the subsequent solutions.

As shown in FIG. 2, this embodiment provides a scheduling method for mTRP transmission, wherein the method is performed by an access network device, and the method includes:
Step 21: Determine terminal capability information;

The terminal capability information is used to schedule the transmission operation of multiple downlink control information (M-DCI) of the multiple transmission reception point (mTRP) of the terminal.

Here, the terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of a new radio (NR) terminal (for example, an R17 NR terminal).

Here, the access network device involved in the present disclosure may be various types of base stations, for example, base stations of third-generation mobile communication (3G) networks, base stations of fourth-generation mobile communication (4G) networks, base stations of fifth-generation mobile communication (5G) networks, or other evolved base stations.

Exemplarily, the operation of scheduling the transmission of multiple downlink control information (M-DCI) of the multiple transmission reception point (mTRP) of the terminal may include: scheduling the transmission of multiple downlink control information (M-DCI) of the multiple transmission reception point (mTRP) of the terminal, or not scheduling the transmission of multiple downlink control information (M-DCI) of the multiple transmission reception point (mTRP) of the terminal.

In one embodiment, the terminal capability information may be the MTTD between the terminal and different TRPs;

In one embodiment, a maximum transmit timing difference (MTTD) supported by the terminal is determined; wherein the MTTD is used to schedule the transmission operation of multiple downlink control information (M-DCI) of multiple transmission reception point (mTRP) of the terminal.

In one embodiment, a maximum transmit timing difference (MTTD) supported by the terminal is determined. Based on the MTTD, it is determined whether to schedule the transmission of the multiple downlink control information (M-DCI) of the multiple transmission reception point (mTRP) of the terminal.

In one embodiment, a maximum transmit timing difference (MTTD) supported by the terminal is determined, and a transmission operation of the M-DCI of the mTRP of the terminal is scheduled based on the MTTD and a difference between the timing advances (TA) between the TRPs of the mTRP.

In one embodiment, a maximum transmit timing difference (MTTD) supported by the terminal is determined. In response to the difference between the TAs of the MTTD and the TRPs being smaller than or equal to the MTTD, the transmission of the M-DCI of the mTRP of the terminal is scheduled; or in response to the difference between the TAs of the MTTD and the TRPs being greater than or equal to the MTTD, the transmission of the M-DCI of the mTRP of the terminal is not scheduled.

In one embodiment, the MTTD supported by the terminal is determined based on predetermined configuration information, and the transmission operation of multiple downlink control information (M-DCI) of multiple transmission reception point (mTRP) of the terminal is scheduled based on the MTTD.

In one embodiment, the MTTD supported by the terminal is determined based on pre-set predetermined configuration information, and the transmission operation of the multiple downlink control information (M-DCI) of the multiple transmission reception point (mTRP) of the terminal is scheduled based on the MTTD.

In one embodiment, the MTTD supported by the terminal is determined based on predetermined configuration information determined according to a predetermined protocol rule, and the transmission operation of multiple downlink control information (M-DCI) of multiple transmission reception point (mTRP) of the terminal is scheduled based on the MTTD.

In one embodiment, the MTTD supported by the terminal is determined based on predetermined configuration information, a receive timing difference (RTD) and a cyclic prefix (CP), and the transmission operation of multiple downlink control information (M-DCI) of multiple transmission reception point (mTRP) of the terminal is scheduled based on the MTTD.

It should be noted that the predetermined protocol rule may be a communication rule for wireless communication between the terminal and the access network device. The predetermined protocol rule may be agreed upon in advance. The terminal and the access network device may perform wireless communication with each other based on the agreed predetermined protocol rule.

In one embodiment, the predetermined configuration information includes first predetermined configuration information and second predetermined configuration information. In response to the RTD being greater than or equal to the CP, the MTTD is determined based on the first predetermined configuration information. Based on the MTTD, the transmission operation of the multiple downlink control information (M-DCI) of the multi-transmission reception point mTRP of the terminal is scheduled.

In one embodiment, the predetermined configuration information includes first predetermined configuration information and second predetermined configuration information. In response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled.

In one embodiment, the predetermined configuration information includes first predetermined configuration information and second predetermined configuration information. In response to the RTD being greater than or equal to the CP, the MTTD is determined based on the first predetermined configuration information, or, in response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled. The first predetermined configuration information indicates a mapping relationship between a frequency range and MTTD; the second predetermined configuration information indicates a mapping relationship between a frequency range, a predetermined value and a cyclic prefix (CP), and the predetermined value and the cyclic prefix are used to determine the corresponding MTTD.

For example, please refer to Table 1, which shows the mapping relationship between the frequency range and the MTTD.

**Table 1:**

| Frequency range | MTTD (µs) |
|---|---|
| FR1 | 34.6 |
| FR2-1 | 8.5 |

It should be noted that, the above mapping relationship may be a relationship between a frequency range of inter-band carrier aggregation (CA) and the MTTD.

Exemplarily, please refer to Table 2, which shows the mapping relationship between the frequency range, the predetermined value and the cyclic prefix (CP).

**Table 2:**

| Frequency range | MTTD (µs) |
|---|---|
| FR1 | CP+M1 |
| FR2-1 | CP+M2 |

M1 and M2 are predetermined values. It should be noted that the values consistent with those in the CA scenario may be adopted, that is, M1=1.6 µs, M2=0.5 µs.

It is understood that each element in the table (Table 1 and Table 2) exists independently. These elements are exemplarily listed in the same table, but it does not mean that all elements in the table must exist at the same time as shown in the table. The value of each element is independent of the value of any other element in the table. Therefore, those skilled in the art can understand that the value of each element in the table is an independent embodiment.

It should be noted that the terminal and/or network device needs to operate in a certain frequency range (FR). The frequency range of FR1 in FR can be between 450MHz and 6GHz, and the frequency range of FR2 can be between 24GHz and 52GHz. The FR2-1 can be a sub-range further divided from the frequency range of FR2, for example, the range corresponding to 24250-27500MHz corresponding to the frequency band n285.

In the above example, the mapping relationship may be pre-agreed, and the agreed mapping relationship may be stored in the access network device in advance for query. In one embodiment, the predetermined configuration information includes first predetermined configuration information and second predetermined configuration information. The CP is determined based on the CP type and the subcarrier spacing of data transmission. In response to the RTD being greater than or equal to the CP, the MTTD is determined based on the first predetermined configuration information, or, in response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled. The first predetermined configuration information indicates the mapping relationship between the frequency range and the MTTD; the second predetermined configuration information indicates the mapping relationship between the frequency range, the predetermined value and the CP, and the predetermined value and the cyclic prefix are used to determine the corresponding MTTD. It should be noted that the CP type may be the first CP type or the second CP type. For example, the first CP type may be a normal CP and the second CP type may be an extended CP.

In some embodiments, the mapping relationship between the frequency range and the MTTD may be a one-to-one relationship, that is, one frequency range may correspond to one MTTD, so that after determining the frequency range used, the terminal and/or network device may determine the MTTD corresponding to the frequency range used based on the mapping relationship to schedule the transmission of multiple downlink control information (M-DCI) of the multiple transmission reception point (mTRP) of the terminal. Alternatively, the mapping relationship between the frequency range and the MTTD may be a one-to-many relationship, that is, one frequency range may correspond to at least two MTTDs, so that after determining the frequency range used, the terminal and/or network device may determine at least two MTTDs corresponding to the frequency range used based on the mapping relationship, and determine one MTTD from the at least two MTTDs to schedule the transmission of multiple downlink control information (M-DCI) of the multiple transmission reception point (mTRP) of the terminal. Alternatively, the mapping relationship between the frequency range and the MTTD may be a many-to-one relationship, that is, multiple frequency ranges may correspond to one MTTD, so that no matter what frequency range the terminal and/or network device uses, it may schedule the transmission of multiple downlink control information (M-DCI) of the multiple transmission reception point (mTRP) of the terminal based on the MTTD.

In one embodiment, the MTTD supported by the terminal is determined based on terminal capability information, wherein the terminal capability information indicates the MTTD. Based on the MTTD, a transmission operation of multiple downlink control information (M-DCI) of a multiple transmission reception point (mTRP) of the terminal is scheduled.

In one embodiment, terminal capability information sent by the terminal is received, the MTTD supported by the terminal is determined based on the terminal capability information, wherein the terminal capability information indicates the MTTD, and the transmission operation of multiple downlink control information (M-DCI) of multiple transmission reception point (mTRP) of the terminal is scheduled based on the MTTD.

It should be noted that the terminal capability information may be used to indicate: in the transmission scenario of the multiple downlink control information (M-DCI) scheduling the multiple transmission reception point (mTRP) of the terminal, the capabilities related to the transmission of the multiple downlink control information (M-DCI) of the multiple transmission reception point (mTRP) supported by the terminal, for example, the maximum transmission link timing difference between different TRPs that the terminal can support.

In one embodiment, terminal capability information sent by the terminal is received, wherein the MTTD is determined based on an operating frequency range; or, the MTTD is determined based on a current operating frequency band. Based on the terminal capability information, the MTTD supported by the terminal is determined, wherein the terminal capability information indicates the MTTD. Based on the MTTD, a transmission operation of multiple downlink control information (M-DCI) of a multiple transmission reception point (mTRP) of the terminal is scheduled.

In one embodiment, in response to predetermined configuration information being configured and the terminal capability information being received, the MTTD supported by the terminal is determined based on the terminal capability information. Based on the MTTD, a transmission operation of multiple downlink control information (M-DCI) of a multiple transmission reception point (mTRP) of the terminal is scheduled.

In the disclosed embodiment, the maximum transmit timing difference (MTTD) supported by the terminal is determined; based on the MTTD, the transmission operation of the multiple downlink control information (M-DCI) of the multiple transmission reception point (mTRP) of the terminal is scheduled. Here, whether to schedule the transmission of the multiple downlink control information (M-DCI) of the multiple transmission reception point (mTRP) of the terminal can be determined based on the maximum transmit timing difference (MTTD) supported by the terminal. In this way, whether to schedule the transmission of the multiple downlink control information (M-DCI) of the multiple transmission reception point (mTRP) of the terminal can be adapted to the capability of the terminal. Compared with scheduling the transmission of the multiple downlink control information (M-DCI) of the multiple transmission reception point (mTRP) of the terminal without considering the capability of the terminal, the scheduling can be adapted to the maximum transmit timing difference (MTTD) supported by the terminal, so that the transmission of the multiple downlink control information (M-DCI) of the multiple transmission reception point (mTRP) of the terminal can be scheduled more reliably.

It should be noted that those skilled in the art can understand that the method provided in the embodiments of the present disclosure can be executed alone or together with some methods in the embodiments of the present disclosure or some methods in related technologies.

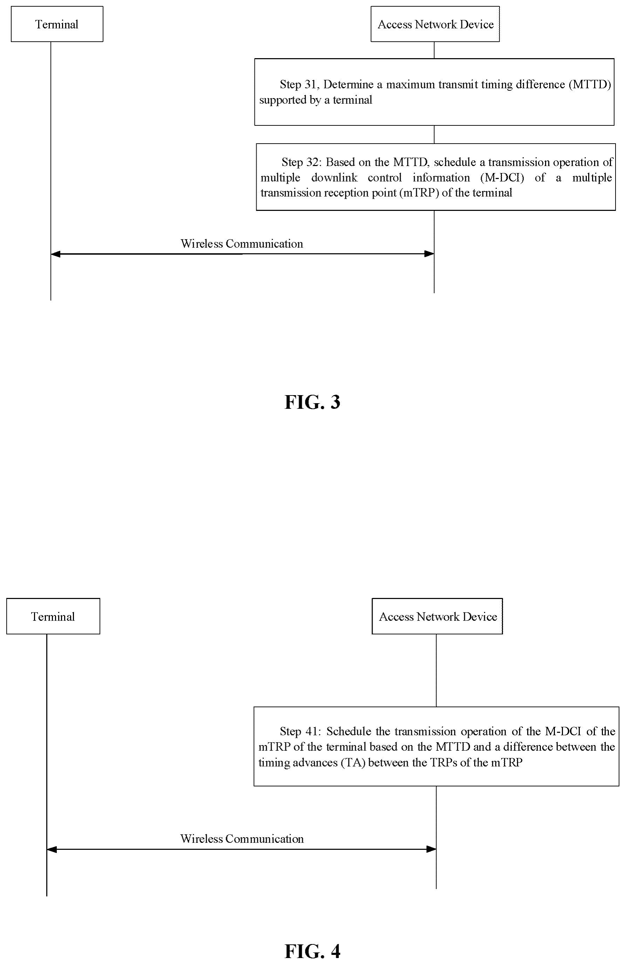

As shown in FIG. 3, an embodiment of the present disclosure provides a scheduling method for mTRP transmission, wherein the method is performed by an access network device, and the method includes:
Step 31, Determine a maximum transmit timing difference (MTTD) supported by a terminal;
Step 32: Based on the MTTD, schedule a transmission operation of multiple downlink control information (M-DCI) of a multiple transmission reception point (mTRP) of the terminal.

In one embodiment, a maximum transmit timing difference (MTTD) supported by the terminal is determined. In response to the difference between the TAs of the MTTD and the TRPs being smaller than or equal to the MTTD, the transmission of the M-DCI of the mTRP of the terminal is scheduled; or in response to the difference between the TAs of the MTTD and the TRPs being greater than or equal to the MTTD, the transmission of the M-DCI of the mTRP of the terminal is not scheduled.

In one embodiment, the multi-TRP includes a first TRP and a second TRP. The timing advance corresponding to the terminal and the first TRP is TA1, and the timing advance corresponding to the terminal and the second TRP is TA2, then the difference in timing advances (TA) between the TRPs may be TA, TA=TA2-TA1. It should be noted that if TA is a negative value, the absolute value of TA may be taken as the value of TA.

In one embodiment, the scheduling the transmission of the M-DCI of the mTRP of the terminal may be a transmission between the mTRP and the terminal controlled based on the way of M-DCI. The way of M-DCI is a transmission method in which multiple physical downlink control channels (PDCCH) are used to schedule respective physical downlink shared channels (PDSCH).

In one embodiment, the MTTD supported by the terminal is determined based on predetermined configuration information, and the transmission operation of multiple downlink control information (M-DCI) of multiple transmission reception point (mTRP) of the terminal is scheduled based on the MTTD.

In one embodiment, the MTTD supported by the terminal is determined based on pre-set predetermined configuration information, and the transmission operation of the multiple downlink control information (M-DCI) of the multiple transmission reception point (mTRP) of the terminal is scheduled based on the MTTD.

In one embodiment, the MTTD supported by the terminal is determined based on predetermined configuration information determined according to a predetermined protocol rule, and the transmission operation of multiple downlink control information (M-DCI) of multiple transmission reception point (mTRP) of the terminal is scheduled based on the MTTD.

In one embodiment, the MTTD supported by the terminal is determined based on predetermined configuration information, a receive timing difference (RTD) and a cyclic prefix (CP), and the transmission operation of multiple downlink control information (M-DCI) of multiple transmission reception point (mTRP) of the terminal is scheduled based on the MTTD.

In one embodiment, the predetermined configuration information includes first predetermined configuration information and second predetermined configuration information. In response to the RTD being greater than or equal to the CP, the MTTD is determined based on the first predetermined configuration information. Based on the MTTD, the transmission operation of the multiple downlink control information (M-DCI) of the multi-transmission reception point mTRP of the terminal is scheduled.

In one embodiment, the predetermined configuration information includes first predetermined configuration information and second predetermined configuration information. In response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled.

In one embodiment, the predetermined configuration information includes first predetermined configuration information and second predetermined configuration information. In response to the RTD being greater than or equal to the CP, the MTTD is determined based on the first predetermined configuration information, or, in response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled. The first predetermined configuration information indicates a mapping relationship between a frequency range and MTTD; the second predetermined configuration information indicates a mapping relationship between a frequency range, a predetermined value and a cyclic prefix (CP), and the predetermined value and the cyclic prefix are used to determine the corresponding MTTD.

In one embodiment, the predetermined configuration information includes first predetermined configuration information and second predetermined configuration information. The CP is determined based on the CP type and the subcarrier spacing of data transmission. In response to the RTD being greater than or equal to the CP, the MTTD is determined based on the first predetermined configuration information, or, in response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled. The first predetermined configuration information indicates the mapping relationship between the frequency range and the MTTD; the second predetermined configuration information indicates the mapping relationship between the frequency range, the predetermined value and the CP, and the predetermined value and the cyclic prefix are used to determine the corresponding MTTD. It should be noted that the CP type may be the first CP type or the second CP type. For example, the first CP type may be a normal CP and the second CP type may be an extended CP.

In one embodiment, the MTTD supported by the terminal is determined based on terminal capability information, wherein the terminal capability information indicates the MTTD. Based on the MTTD, a transmission operation of multiple downlink control information (M-DCI) of a multiple transmission reception point (mTRP) of the terminal is scheduled.

In one embodiment, terminal capability information sent by the terminal is received, the MTTD supported by the terminal is determined based on the terminal capability information, wherein the terminal capability information indicates the MTTD, and the transmission operation of multiple downlink control information (M-DCI) of multiple transmission reception point (mTRP) of the terminal is scheduled based on the MTTD.

In one embodiment, terminal capability information sent by the terminal is received, wherein the MTTD is determined based on an operating frequency range; or, the MTTD is determined based on a current operating frequency band. Based on the terminal capability information, the MTTD supported by the terminal is determined, wherein the terminal capability information indicates the MTTD. Based on the MTTD, a transmission operation of multiple downlink control information (M-DCI) of a multiple transmission reception point (mTRP) of the terminal is scheduled.

In one embodiment, in response to predetermined configuration information being configured and the terminal capability information being received, the MTTD supported by the terminal is determined based on the terminal capability information. Based on the MTTD, a transmission operation of multiple downlink control information (M-DCI) of a multiple transmission reception point (mTRP) of the terminal is scheduled.

It should be noted that those skilled in the art can understand that the method provided in the embodiments of the present disclosure can be executed alone or together with some methods in the embodiments of the present disclosure or some methods in related technologies.

As shown in FIG. 4, an embodiment of the present disclosure provides a scheduling method for mTRP transmission, wherein the method is performed by an access network device, and the method includes:

Step 41: Schedule the transmission operation of the M-DCI of the mTRP of the terminal based on the MTTD and a difference between the timing advances (TA) between the TRPs of the mTRP.

In one embodiment, in response to the difference between the TAs of the MTTD and the TRPs being smaller than or equal to the MTTD, the transmission of the M-DCI of the mTRP of the terminal is scheduled; or in response to the difference between the TAs of the MTTD and the TRPs being greater than or equal to the MTTD, the transmission of the M-DCI of the mTRP of the terminal is not scheduled.

In one embodiment, a maximum transmit timing difference (MTTD) supported by the terminal is determined. In response to the difference between the TAs of the MTTD and the TRPs being smaller than or equal to the MTTD, the transmission of the M-DCI of the mTRP of the terminal is scheduled; or in response to the difference between the TAs of the MTTD and the TRPs being greater than or equal to the MTTD, the transmission of the M-DCI of the mTRP of the terminal is not scheduled.

It should be noted that those skilled in the art can understand that the method provided in the embodiments of the present disclosure can be executed alone or together with some methods in the embodiments of the present disclosure or some methods in related technologies.

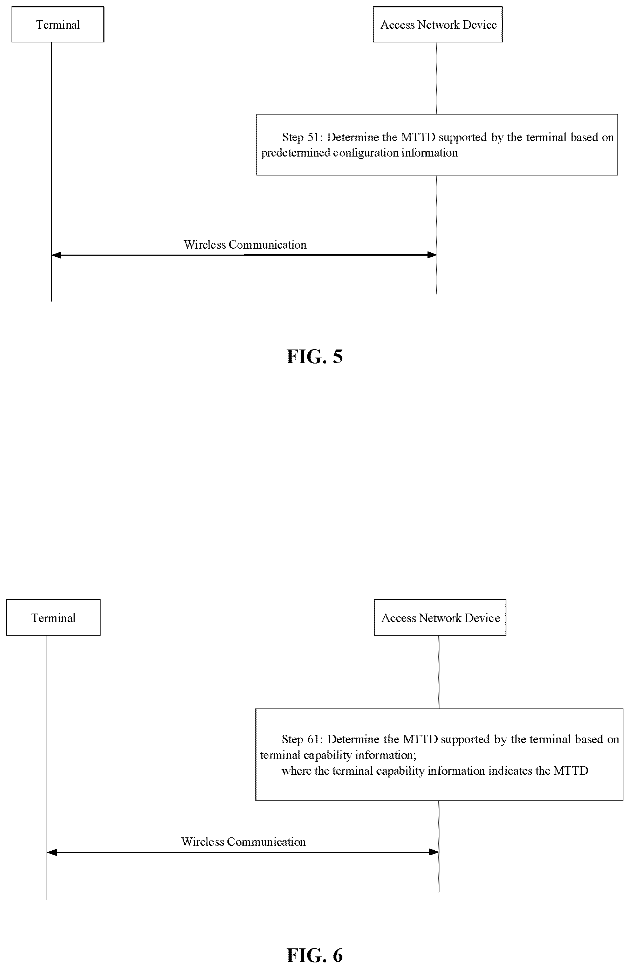

As shown in FIG. 5, an embodiment of the present disclosure provides a scheduling method for mTRP transmission, wherein the method is performed by an access network device, and the method includes:
Step 51: Determine the MTTD supported by the terminal based on predetermined configuration information.

In one embodiment, the MTTD supported by the terminal is determined based on predetermined configuration information, and the transmission operation of multiple downlink control information (M-DCI) of multiple transmission reception point (mTRP) of the terminal is scheduled based on the MTTD.

In one embodiment, the MTTD supported by the terminal is determined based on pre-set predetermined configuration information, and the transmission operation of the multiple downlink control information (M-DCI) of the multiple transmission reception point (mTRP) of the terminal is scheduled based on the MTTD.

In one embodiment, the MTTD supported by the terminal is determined based on predetermined configuration information determined according to a predetermined protocol rule, and the transmission operation of multiple downlink control information (M-DCI) of multiple transmission reception point (mTRP) of the terminal is scheduled based on the MTTD.

In one embodiment, the MTTD supported by the terminal is determined based on predetermined configuration information, a receive timing difference (RTD) and a cyclic prefix (CP), and the transmission operation of multiple downlink control information (M-DCI) of multiple transmission reception point (mTRP) of the terminal is scheduled based on the MTTD.

It should be noted that the predetermined protocol rule may be a communication rule for wireless communication between the terminal and the access network device. The predetermined protocol rule may be agreed upon in advance. The terminal and the access network device may perform wireless communication with each other based on the agreed predetermined protocol rule.

In one embodiment, the predetermined configuration information includes first predetermined configuration information and second predetermined configuration information. In response to the RTD being greater than or equal to the CP, the MTTD is determined based on the first predetermined configuration information. Based on the MTTD, the transmission operation of the multiple downlink control information (M-DCI) of the multi-transmission reception point mTRP of the terminal is scheduled.

In one embodiment, the predetermined configuration information includes first predetermined configuration information and second predetermined configuration information. In response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled.

In one embodiment, the predetermined configuration information includes first predetermined configuration information and second predetermined configuration information. In response to the RTD being greater than or equal to the CP, the MTTD is determined based on the first predetermined configuration information, or, in response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled. The first predetermined configuration information indicates a mapping relationship between a frequency range and MTTD; the second predetermined configuration information indicates a mapping relationship between a frequency range, a predetermined value and a cyclic prefix (CP), and the predetermined value and the cyclic prefix are used to determine the corresponding MTTD.

In one embodiment, the predetermined configuration information includes first predetermined configuration information and second predetermined configuration information. The CP is determined based on the CP type and the subcarrier spacing of data transmission. In response to the RTD being greater than or equal to the CP, the MTTD is determined based on the first predetermined configuration information, or, in response to the RTD being less than or equal to the CP, the MTTD is determined based on the second predetermined configuration information. Based on the MTTD, the transmission operation of the multiple downlink control information (M-DCI) of the multi-transmission reception point mTRP of the terminal is scheduled. The first predetermined configuration information indicates the mapping relationship between the frequency range and the MTTD; the second predetermined configuration information indicates the mapping relationship between the frequency range, the predetermined value and the CP, and the predetermined value and the cyclic prefix are used to determine the corresponding MTTD. It should be noted that the CP type may be the first CP type or the second CP type. For example, the first CP type may be a normal CP and the second CP type may be an extended CP.

It should be noted that those skilled in the art can understand that the method provided in the embodiments of the present disclosure can be executed alone or together with some methods in the embodiments of the present disclosure or some methods in related technologies.

As shown in FIG. 6, an embodiment of the present disclosure provides a method for scheduling mTRP transmission, wherein the method is performed by an access network device, and the method includes:
Step 61: Determine the MTTD supported by the terminal based on terminal capability information;
wherein the terminal capability information indicates the MTTD.

In one embodiment, terminal capability information sent by the terminal is received, the MTTD supported by the terminal is determined based on the terminal capability information, wherein the terminal capability information indicates the MTTD, and the transmission operation of multiple downlink control information (M-DCI) of multiple transmission reception point (mTRP) of the terminal is scheduled based on the MTTD.

In one embodiment, terminal capability information sent by the terminal is received, wherein the MTTD is determined based on an operating frequency range; or, the MTTD is determined based on a current operating frequency band. Based on the terminal capability information, the MTTD supported by the terminal is determined, wherein the terminal capability information indicates the MTTD. Based on the MTTD, determine whether to schedule a transmission of multiple downlink control information (M-DCI) of a multiple transmission reception point (mTRP) of the terminal.

It should be noted that those skilled in the art can understand that the method provided in the embodiments of the present disclosure can be executed alone or together with some methods in the embodiments of the present disclosure or some methods in related technologies.

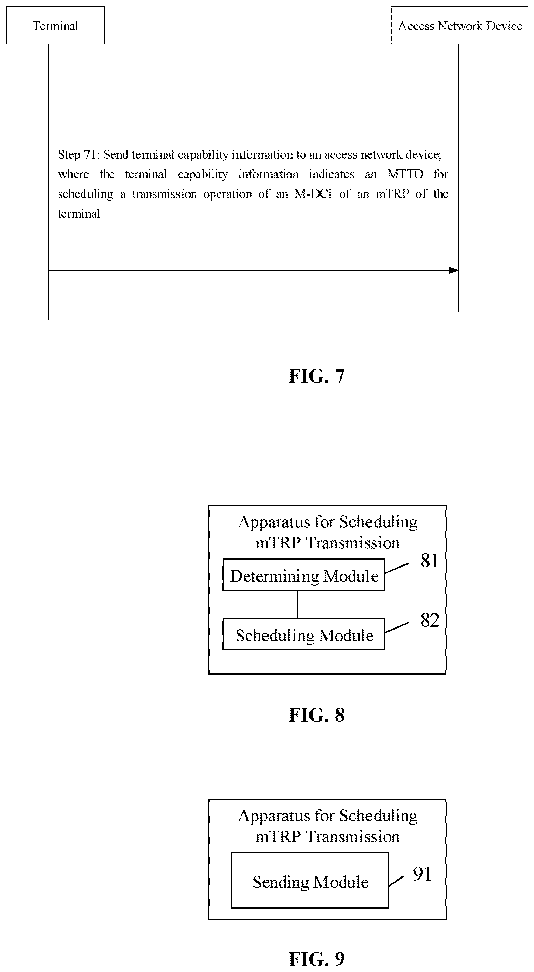

As shown in FIG. 7, an embodiment of the present disclosure provides a scheduling method for mTRP transmission, wherein the method is executed by a terminal, and the method includes:
Step 71: Send terminal capability information to an access network device;
wherein the terminal capability information indicates an MTTD for scheduling a transmission operation of an M-DCI of an mTRP of the terminal.

Here, the terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of a new radio (NR) terminal (for example, an R17 NR terminal).

Here, the access network device involved in the present disclosure may be various types of base stations, for example, base stations of third-generation mobile communication (3G) networks, base stations of fourth-generation mobile communication (4G) networks, base stations of fifth-generation mobile communication (5G) networks, or other evolved base stations.

In one embodiment, the terminal capability information is sent to the access network device, wherein the terminal capability information indicates the MTTD for scheduling the transmission operation of the M-DCI of the mTRP of the terminal. Based on the terminal capability information, the access network device determines the MTTD supported by the terminal. Based on the MTTD, the access network device schedules the transmission operation of the multiple downlink control information (M-DCI) of the multiple transmission reception point (mTRP) of the terminal.

In one embodiment, the terminal capability information is sent to the access network device, wherein the MTTD is determined based on an operating frequency range; or, the MTTD is determined based on a current operating frequency band. Based on the terminal capability information, the access network device determines the MTTD supported by the terminal, wherein the terminal capability information indicates the MTTD. Based on the MTTD, the access network device schedules the transmission operation of the multiple downlink control information (M-DCI) of the multiple transmission reception point (mTRP) of the terminal.

It should be noted that those skilled in the art can understand that the method provided in the embodiments of the present disclosure can be executed alone or together with some methods in the embodiments of the present disclosure or some methods in related technologies.

As shown in FIG. 8, an embodiment of the present disclosure provides an apparatus for scheduling mTRP transmission, wherein the apparatus includes:
a determining module 81, configured to determine a maximum transmit timing difference (MTTD) supported by a terminal; and
a scheduling module 82, configured to schedules a transmission operation of a multiple downlink control information (M-DCI) of a multiple transmission reception point (mTRP) of the terminal based on the MTTD.

It should be noted that those skilled in the art can understand that the method provided in the embodiments of the present disclosure can be executed alone or together with some methods in the embodiments of the present disclosure or some methods in related technologies.

As shown in FIG. 9, an embodiment of the present disclosure provides an apparatus for scheduling mTRP transmission, wherein the apparatus includes:
a sending module 91, configured to send terminal capability information to an access network device;
wherein the terminal capability information indicates an MTTD for scheduling a transmission operation of an M-DCI of the mTRP of the terminal.

It should be noted that those skilled in the art can understand that the method provided in the embodiments of the present disclosure can be executed alone or together with some methods in the embodiments of the present disclosure or some methods in related technologies.

The present disclosure provides a communication device, the communication device includes:
a processor; and
a memory for storing processor-executable instructions;
wherein the processor is configured to implement the method applied to any embodiment of the present disclosure when running the executable instructions.

The processor may include various types of storage media, which are non-transient computer storage media that can continue to memorize information stored thereon after the communication device loses power.

The processor may be connected to the memory via a bus or the like to read the executable program stored in the memory.

An embodiment of the present disclosure further provides a computer storage medium, wherein the computer storage medium stores a computer executable program, and when the executable program is executed by a processor, the method of any embodiment of the present disclosure is implemented.

Regarding the apparatus in the above embodiments, the specific manner in which each module performs operations has been described in detail in the embodiment of the method, and will not be elaborated here.

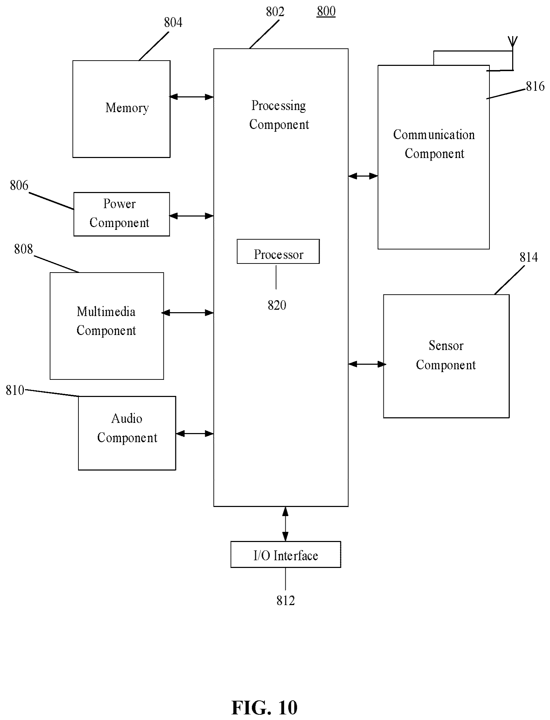

As shown in FIG. 10, one embodiment of the present disclosure provides a structure of a terminal.

Referring to FIG. 10, the terminal 800 is shown. The embodiment provides a terminal 800, which specifically can be a mobile phone, a computer, a digital broadcast terminal, a messaging device, a game console, a tablet device, a medical device, a fitness device, a personal digital assistant, and the like.

Referring to FIG. 10, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operations of the terminal 800, such as operations associated with display, telephone calls, data communications, camera operations, and recording operations. The processing component 802 may include one or more processors 820 to execute instructions to complete all or part of the steps of the above method. Additionally, processing component 802 may include one or more modules that facilitate interaction between processing component 802 and other components. For example, processing component 802 may include a multimedia module to facilitate interaction between multimedia component 808 and processing component 802.

The memory 804 is configured to store various types of data to support operations at the device 800. Examples of such data include instructions for any application or method operating on the terminal 800, contact data, phonebook data, messages, pictures, videos, etc. The memory 804 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power component 806 provides power to various components of the terminal 800. The power component 806 may include a power management system, one or more power supplies, and other components associated with generating, managing, and distributing power for terminal 800.

The multimedia component 808 includes a screen providing an output interface between the terminal 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 808 includes a front camera and/or a rear camera. When the device 800 is in an operation mode, such as a photographing mode or a video mode, the front camera and/or the rear camera can receive external multimedia data. Each front camera and rear camera can be a fixed optical lens system or have focal length and optical zoom capability.

The audio component 810 is configured to output and/or input audio signals. For example, the audio component 810 includes a microphone (MIC), which is configured to receive an external audio signal when the terminal 800 is in an operation mode, such as a call mode, a recording mode and a voice recognition mode. Received audio signals may be further stored in memory 804 or sent via communication component 816. In some embodiments, the audio component 810 also includes a speaker for outputting audio signals.

The I/O interface 812 provides an interface between the processing component 802 and a peripheral interface module, which may be a keyboard, a click wheel, a button, and the like. These buttons may include, but are not limited to: a home button, volume buttons, start button, and lock button.

The sensor component 814 includes one or more sensors for providing terminal 800 with various aspects of status assessment. For example, the sensor component 814 can detect the open/closed state of the device 800, the relative positioning of components, such as the display and the keypad of the terminal 800, the sensor component 814 can also detect the terminal 800 or a change in the position of a component of the terminal 800, the presence or absence of user's contact with the terminal 800, the change of orientation or acceleration/deceleration of the terminal 800 and the temperature change of the terminal 800. The sensor component 814 may include a proximity sensor configured to detect the presence of nearby objects in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal 800 and other devices. The terminal 800 can access a wireless network based on communication standards, such as Wi-Fi, 2G or 3G, or a combination thereof. In an exemplary embodiment, the communication component 816 receives broadcast signals or broadcast related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra wideband (UWB) technology, bluetooth (BT) technology and other technologies.

In an exemplary embodiment, terminal 800 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 804 including instructions, which can be executed by the processor 820 of the terminal 800 to implement the above method. For example, the non-transitory computer readable storage medium may be ROM, random access memory (RAM), CD-ROM, magnetic tape, floppy disk, and optical data storage device, and the like.

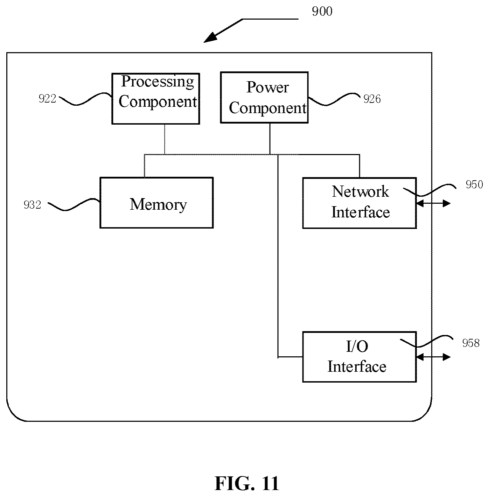

As shown in FIG. 11, an embodiment of the present disclosure shows a structure of a base station. For example, the base station 900 may be provided as a network side device. Referring to FIG. 11, the base station 900 includes a processing component 922, which further includes one or more processors, and a memory resource represented by a memory 932 for storing instructions executable by the processing component 922, such as application programs. The application program stored in memory 932 may include one or more modules each corresponding to a set of instructions. In addition, the processing component 922 is configured to execute instructions, so as to perform any of the aforementioned methods applied to the base station.

Base station 900 may also include a power component 926 configured to perform power management of base station 900, a wired or wireless network interface 950 configured to connect base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other embodiments of the invention will be readily apparent to those skilled in the art from consideration of the specification and practice of the invention disclosed herein. This disclosure is intended to cover any modification, use or adaptation of the present invention, these modifications, uses or adaptations follow the general principles of the present invention and include common knowledge or conventional technical means in the technical field not disclosed in this disclosure. The specification and examples are to be considered exemplary only, with a true scope and spirit of the invention being indicated by the following claims.

It should be understood that the present invention is not limited to the precise constructions which have been described above and shown in the accompanying drawings, and various modifications and changes may be made without departing from the scope thereof. The scope of the invention is limited only by the appended claims.

## Claims

1. A method for scheduling multiple transmission reception point (mTRP) transmission, wherein the method is performed by an access network device, and the method comprises:
determining a maximum transmit timing difference (MTTD) supported by a terminal; and
scheduling a transmission operation of multiple downlink control information (M-DCI) of the mTRP of the terminal based on the MTTD.

2. The method according to claim 1, wherein scheduling the transmission operation of the M-DCI of the mTRP of the terminal based on the MTTD comprises:
scheduling the transmission operation of the M-DCI of the mTRP of the terminal based on the MTTD and a difference between timing advances (TA) of TRPs of the mTRP.

3. The method according to claim 2, wherein scheduling the transmission operation of the M-DCI of the mTRP of the terminal based on the MTTD and the difference between the TAs of TRPs of the mTRP comprises:
scheduling the transmission of the M-DCI of the mTRP of the terminal in response to the difference between the TAs of the MTTD and the TRPs being smaller than or equal to the MTTD.

4. The method according to claim 1, wherein the determining the maximum transmit timing difference (MTTD) supported by the terminal comprises:
determining the MTTD supported by the terminal based on predetermined configuration information;
or,
determining the MTTD supported by the terminal based on terminal capability information, wherein the terminal capability information indicates the MTTD.

5. The method according to claim 4, wherein the determining the MTTD supported by the terminal based on the terminal capability information comprises:
in response to being configured with predetermined configuration information and receiving the terminal capability information, determining the MTTD supported by the terminal based on the terminal capability information.

6. The method according to claim 4, wherein the method further comprises:
receiving the terminal capability information sent by the terminal.

7. The method according to claim 4, wherein the determining the MTTD supported by the terminal based on predetermined configuration information comprises:
determining the MTTD supported by the terminal based on predetermined configuration information, a receive timing difference (RTD) and a cyclic prefix (CP).

8. The method according to claim 7, wherein the predetermined configuration information comprises first predetermined configuration information and second predetermined configuration information; and determining the MTTD supported by the terminal based on the predetermined configuration information, the TRD and the CP comprises:
determining the MTTD based on the first predetermined configuration information in response the RTD being greater than or equal to the CP;
or,
determining the MTTD based on the second predetermined configuration information in response the RTD being smaller than or equal to the CP.

9. The method according to claim 8, wherein the first predetermined configuration information indicates a mapping relationship between a frequency range and the MTTD.

10. The method according to claim 8, wherein the second predetermined configuration information indicates a mapping relationship between a frequency range, a predetermined value and a cyclic prefix (CP), and the predetermined value and the cyclic prefix are used to determine a corresponding MTTD.

11. The method according to claim 10, wherein the method further comprises:
determining the CP based on a subcarrier spacing of data transmission and a CP type.

12. The method according to claim 4, wherein the MTTD is determined based on an operating frequency range; or, the MTTD is determined based on a current operating frequency band.

13. A method for scheduling multiple transmission reception point (mTRP) transmission, wherein the method is performed by a terminal, and the method comprises:
sending terminal capability information to an access network device;
wherein the terminal capability information indicates a maximum transmit timing difference (MTTD) for scheduling a transmission operation of multiple downlink control information (M-DCI) of the mTRP of the terminal.

14. The method according to claim 13, wherein the MTTD is determined based on an operating frequency range; or, the MTTD is determined based on a current operating frequency band.

15. An apparatus for scheduling multiple transmission reception point (mTRP) transmission, wherein the apparatus comprises:
a determining module, configured to determine a maximum transmit timing difference (MTTD) supported by a terminal; and
a scheduling module, configured to: schedule a transmission operation of multiple downlink control information (M-DCI) of the mTRP of the terminal based on the MTTD.

16. An apparatus for scheduling multiple transmission reception point (mTRP) transmission, wherein the apparatus comprises:
a sending module, configured to send terminal capability information to an access network device;
wherein the terminal capability information indicates a maximum transmit timing difference (MTTD) for scheduling a transmission operation of multiple downlink control information (M-DCI) of the mTRP of the terminal.

17. A communication device, comprising:
an antenna;
a memory; and
a processor, connected to the antenna and the memory respectively, and is configured to control transmission and reception of the antenna by executing computer executable instructions stored in the memory, and is able to implement the method according to any one of claims 1 to 12 or 13 to 14.

18. A computer storage medium storing computer executable instructions, wherein the computer executable instructions, after being executed by a processor, are able to implement the method according to any one of claims 1 to 12 or 13 to 14.
